# FASCICULE DE BREVET EUROPEEN

(11) **EP 3 802 441 B1**
(45) Date de publication et mention de la délivrance du brevet: **14.06.2023**
(21) Numéro de dépôt: 19728033.2
(22) Date de dépôt: 29.05.2019
(51) Int. Cl.: C02F 11/147, C02F 1/20, C02F 1/24, C02F 1/56, C02F 1/74, C02F 11/122, C02F 11/126, B01D 21/24

(54) **PROCEDE ET DISPOSITIF DE TRAITEMENT POUR DESHYDRATATION DE BOUES ORGANIQUES**
BEHANDLUNGSVERFAHREN UND VORRICHTUNG ZUR ENTWÄSSERUNG VON ORGANISCHEN SCHLÄMMEN
TREATMENT METHOD AND DEVICE FOR DEHYDRATION OF ORGANIC SLUDGES

(30) Priorité: 01.06.2018 FR 1854796
(43) Date de publication de la demande: 14.04.2021
(73) Titulaire: Orege, 78960 VOISINS-LE-BRETONNEUX (FR)
(72) Inventeur: CAPEAU, Patrice, 84240 ANSOUIS (FR); GENDROT, Pascal, 78110 LE VESINET (FR)
(74) Mandataire: Corret, Hélène
(86) Numéro de dépôt international: PCT/EP2019/064113
(87) Numéro de publication internationale: WO 2019/229196

(56) Documents cités:
- WO-A1-2016/097343
- FR-A1- 3 013 701
- US-B1- 6 224 772

## Description

La présente invention concerne un procédé de traitement et/ou de déshydratation en continu ou en semi-continu de boue liquide organique par injection d'air dans le flux de boue et injection de floculant dans l'émulsion ainsi produite.

Elle concerne également un dispositif de traitement/déshydratation des boues liquides mettant en oeuvre un tel procédé.

L'invention trouve une application particulièrement importante bien que non exclusive dans le domaine de la réduction de volume de boues organiques issues des stations d'épuration des eaux domestiques ou industrielles.

Par boue organique on entend une boue essentiellement chargée en matière organique, c'est à dire comportant plus de 50 %, par exemple plus de 70% d'une matière fabriquée par les êtres vivants, végétaux, animaux, champignons et autres décomposeurs, tels que des micro-organismes.

On connaît déjà des dispositifs de déshydratation de boues (FR 2 729 383) permettant d'améliorer la siccité de boues compactes minérales ou organiques grâce à des racleurs mécaniques se déplaçant sur le fond perméable de cuves de stockage.

De tels dispositifs comportent des risques de colmatage qui nécessitent des moyens de dé-colmatage, et présentent les fragilités des appareillages mécaniques. En outre les boues organiques sont des substances colloïdales dont la décantation est lente et peu efficace.

On connaît aussi des systèmes de tables d'égouttage qui présentent cependant des contraintes d'exploitation importantes, et nécessitent des installations de taille considérables. Elles présentent de plus un manque d'efficacité.

On connaît aussi des systèmes statiques formés par des bacs de décantation.

Mais dans ce cas d'épaississement statique, les temps de séjours sont considérables et engendrent malheureusement des phénomènes de fermentation des boues provoquant des odeurs nauséabondes et une augmentation du caractère colloïdal desdites boues.

On connaît par ailleurs (FR 2 966 818) un procédé de séparation entre liquide et matière en suspension d'une boue, dans lequel on injecte de la boue et de l'air à gros débit dans une enceinte de faible volume.

Bien qu'assez efficace ce procédé est essentiellement applicable à des boues très minéralisées (c'est à dire présentant un % de matière organique sur 100% en poids de Matière solide inférieur à de 5 à 15%).

Le document WO 2015/079175 décrit quant à lui un procédé de traitement de boue liquide par injection d'air dans un flux de boue en jouant sur les vitesses des flux d'air et de boue, et dans lequel on traite la boue par floculation/décantation, l'injection d'un réactif de floculation s'effectuant avant amélioration de la déshydratation dans un épaississeur déversoir. Ici encore, et bien qu'assez efficace, la dessication peut encore être améliorée, notamment en ce qui concerne le temps de floculation et la quantité de floculent nécessaire.

On connaît également (FR 3 013 701 A1) un procédé et un dispositif de traitement d'un effluent organique permettant une bonne déshydratation, mais celle-ci peut encore être améliorée.

Le document WO2016/097343 décrit quant à lui un procédé de déshydratation de boues, comprenant une étape préalable de mixage des boues pour les déstructurer. Un tel procédé nécessite un brassage mécanique, générant des risques de panne et d'encrassement.

La présente invention vise à fournir un procédé et un dispositif répondant mieux que ceux antérieurement connus aux exigences de la pratique, notamment en ce qu'elle permet, par un dégazage approprié, d'obtenir une émulsion floculée plus rapidement, avec moins de réactif (matériau floculent) et ce avec une installation particulièrement compacte.

En utilisant astucieusement l'énergie de dégazage pour créer un floc de boue épaissie favorable ensuite à son extraction dans un système simple de raclage par exemple, et ce sans qu'il n'y ait destruction intempestive dudit floc, on obtient une séparation sensiblement instantanée du floc de boue et de l'eau déliée par flottation.

Pour ce faire, l'invention part du principe d'un traitement et/ou déshydratation en continu ou semi-continu (par batch alternatif) d'une boue, dans lequel on crée une émulsion avec de l'air que l'on dégaze et on flocule en utilisant comme énergie cinétique de maturation l'énergie dudit dégazage.

On utilise ainsi la fonction de dégazage et l'énergie dégagée pour améliorer la pénétration du floculant dans la boue.

Avantageusement on concentre également rapidement en aval les boues en ligne dans un récipient concentrateur.

Dans ce but l'invention propose notamment un procédé de traitement / déshydratation en continu ou semi continu de boue organique, selon la revendication 1.

Ainsi on observe qu'on absorbe l'énergie en réduisant l'énergie cinétique du floc d'un facteur au moins égal à deux.

Il s'agit d'un choc mou du type liquide/liquide.

Un tel dégazage doux et partiel de l'air en excès n'abime pas l'émulsion et va permettre de mieux floculer en utilisant l'énergie du dégazage, ce qui permet une baisse de 10 à 20 % voire jusque 50% du temps de mélange du polymère ainsi qu'une réduction de la quantité de polymère à utiliser.

Par choc mou on entend donc un choc ou contact progressif sans percussion soit sur le floc lui-même par retombée gravitaire sur lui-même , soit sur un volet ou paroi ou disque d'absorption de l'énergie, par exemple un volet souple ou de dimension réduite par exemple de quelques cm², (par exemple de x × y avec x et y < 10 cm), agencé pour freiner le flux, sans pour autant constituer un accident créant une brusque surpression dans le flux.

Par volet ou paroi souple, on entend un élément élastique ou semi-rigide, par exemple en caoutchouc ou équivalent, propre à encaisser et/ou à créer une perte de charge, par freinage, permettant un dégazage par pression, sans pour autant destruction des flocons de boue.

Un tel système permet le dégazage de l'air en excès tout en assurant la continuité de constitution du floc et le respect des vitesses de passage ou de transfert dudit floc pendant le process.

Concernant le polymère, traditionnellement l'exploitant d'une ligne de déshydratation de boues aura tendance à le prévoir en excès pour obtenir un floc certes plus lourd, mais qui ne risque pas de s'écrouler.

Avec l'invention ce risque est considérablement minimisé, car en améliorant de façon simple le processus de floculation par utilisation de l'énergie de dégazage, l'exploitant d'une installation n'est plus enclin à sur-doser.

On obtient en effet des résultats sur les lignes de traitement permettant d'économiser jusqu'à 30 % de floculant.

Par semi continu, on entend par batches successifs, que l'on substitue les uns à la suite des autres à la volée, ou sensiblement sans s'arrêter, pour permettre le traitement en continu ou semi continu, autorisant dès lors une excellente cadence.

En bout de chaîne, le floc maturé qu'on obtient est favorable à l'extraction des matières solides par raclage ou autre type de séparation de l'eau déliée obtenue.

Dans le cas où on crée le choc mou du floc sur lui-même par sortie du floc verticalement ou sensiblement verticalement en fontaine (ou en jet) dans un récipient ouvert à la pression atmosphérique, un tel dégazage doux permet une excellente mise en contact du floc avec l'air. On ne casse pas le floc ce qui a pour effet d'éviter la surconsommation de polymère et donc le relargage de polymère dans le filtrat.

De plus l'énergie des jets de boue émis dans le volume vide supérieur du récipient ouvert à l'atmosphère permet une meilleure incorporation du floculant dans la boue (ce qui permet d'accélérer la floculation).

Egalement avantageusement, le col supérieur d'éjection en fontaine de la boue dans le récipient est agencé pour ménager un volume de boue dans la partie inférieure dudit récipient situé en dessous dudit col de façon à autoriser un temps déterminé optimisé et suffisant de mélange de la boue et du floculant.

Pour ce faire la hauteur du col par rapport au fond du récipient est supérieure ou égale à 30 cm par exemple.

Dans l'autre mode de réalisation de l'invention le choc mou est créé par introduction ou sortie du floc dans une chambre intermédiaire comprenant une paroi de freinage, et/ou une zone de freinage du flux.

Avantageusement et pour ce faire, le floc est introduit dans une enceinte ouverte à l'atmosphère (de dégazage) de passage du floc muni d'une chambre intermédiaire comprenant une paroi formant le volet de freinage, par exemple une paroi souple, située dans le passage du flux, et/ou en vis-à-vis de l'introduction dudit floc.

Avantageusement la paroi de freinage est une paroi semi-cylindrique convexe d'axe perpendiculaire au flux, et dont le sommet (ou génératrice externe) est dirigé vers le flux.

Ici encore, le récipient est agencé pour ménager un volume de boue dans la partie inférieure du récipient de façon à autoriser un temps optimisé et suffisant de maturation du floc, c'est-à-dire de constitution d'un floc (mélange de la boue et du floculant) homogène et dégazé.

Egalement avantageusement l'enceinte comprend une paroi transversale de l'enceinte ouverte en partie basse, permettant à l'émulsion floculée de se répartir à vitesse égale qui peut, ou non, également jouer le rôle de paroi de freinage.

Dans un autre mode de réalisation, la paroi ou volet de freinage est situé à l'avant d'une chambre de sortie du flux dégazé.

Dans des modes de réalisation avantageux, on a de plus et/ou par ailleurs recours à l'une et/ou à l'autre des dispositions suivantes :
- on introduit le floculant dans l'émulsion triphasique après création d'une perte de charge dans l'émulsion par rétrécissement.

Le rétrécissement est par exemple réalisé par un accident de tuyauterie formé par un venturi ou une vanne à manchon ;
- la boue étant alimentée en continu à un débit Q (m3/h), on crée l'émulsion par choc de la boue avec l'air injecté dans la boue à un débit q (Nm3/h) tel que q > 3Q dans une première zone d'écoulement de la boue;
- la première zone est un petit volume notamment confiné entre deux parois latérales (comme dans un venturi ou une restriction de tuyauterie par exemple) et est par exemple inférieur à 0,005 m³, par exemple compris entre 10 cm3 à 200 cm3, de sorte que le mélanqe des flux d'air et de boue ait une vitesse au moins de 10 m/S.

La taille particulièrement réduite de la zone d'injection (par exemple 50 cm3) va autoriser un excellent mélange boue/air.

Il y a en effet à cet endroit une zone de grande vitesse, entraînant des chocs cinétiques, qui permet aux bulles d'air de pénétrer le floc bactérien ;
- on fait ensuite passer l'émulsion dans une enceinte de petit volume (de volume inférieur à 200 l) avant ladite création de perte de charge par rétrécissement.

A noter que la première zone et l'enceinte peuvent également être séparées par une restriction (un venturi et/ou un orifice) formant les deux zones en deux chambres séparées ;
- l'enceinte est tubulaire de diamètre moyen de passage comprise entre 10 mm et 50 mm ;
- l'enceinte est une colonne de diamètre moyen d et de hauteur H ≥ 50 d (par exemple 10 d) la boue étant introduite en partie basse de la colonne dans le lit gazeux créé par l'air injecté au niveau de ladite alimentation en boue (par exemple en dessus ou en dessous) ;
- le floculant est un polymère injecté en sortie immédiate du récipient, avant la mise à l'atmosphère. C'est par exemple un floculant organique de type cationique ;
- on effectue une concentration du floc après dégazage dans le dispositif de filtration et/ou décantation par flottation/tassement de l'émulsion floculée dans une capacité faisant office de concentrateur, la boue concentrée étant évacuée en continue par exemple par surverse.

Avantageusement, en colmatant plus ou moins la surface de la capacité, il est possible de réguler (en fonction des débits d'air et de boues utilisés) l'épaisseur de la couche flottante, qui peut alors et de plus se tasser du fait de son poids, permettant d'obtenir des concentrations de 100 à 120 g/l de MS, sachant que la qualité et la transparence de l'eau obtenue en dessous de la boue floculée reste toujours exceptionnelle (DCO inférieure à 200 mg/l, voir 100 mg/l dans le cas de boues biologiques);
- la capacité est cylindrique ;
- la capacité est formée par un bac parallélépipédique horizontal ;
- on effectue un traitement complémentaire du floc en aval du dégazage par filtration et/ou pressage du floc;
- le traitement complémentaire comprend le passage du floc sur un tambour rotatif de dégrillage ;
- le traitement comprend de plus un pressage supplémentaire par exemple par plaque pressante, avec une pression comprise entre 10 kg et 40 kg, par exemple de 25 kg, ce qui permet d'obtenir une concentration en matière solide encore améliorée pouvant atteindre 90 g par litre.
- l'air est injecté dans le sens du flux de boue.

L'invention propose aussi un dispositif mettant en oeuvre le procédé tel que décrit ci-dessus.

Elle propose également un dispositif de traitement et/ou de déshydratation de boues liquides organiques selon la revendication 18.

Avantageusement la paroi est souple et/ou courbée (par exemple avec un rayon de courbure de plusieurs centimètres, par exemple compris entre 5 cm et 100 cm), avec un sommet dirigé vers le flux.

Dans un mode de réalisation avantageux le dispositif comporte des moyens de création d'une perte de charge dans l'émulsion par rétrécissement avant injection du floculant.
Le rétrécissement est par exemple réalisé par un accident de tuyauterie formé par un venturi ou une vanne, exemple à manchon ou à clapet.

Avantageusement le dispositif comporte des moyens de récupération du floc maturé dans un dispositif de séparation par flottation.

Dans des modes de réalisation avantageux du dispositif, on a de plus et/ou par ailleurs recours à l'une et/ou à l'autre des dispositions suivantes :
- la boue étant alimentée en continu à un débit Q (m3/h), le dispositif comporte une première zone d'écoulement de la boue dans laquelle on crée l'émulsion par choc de la boue avec l'air injecté dans la boue à un débit q (Nm3/h) ;
- la première zone est un petit volume notamment confiné entre deux parois latérales (comme dans un venturi ou une restriction de tuyauterie par exemple) et est par exemple inférieur à 0,005 m³, par exemple compris entre 10 cm3 à 200 cm3 ;
- le dispositif comporte une enceinte en ligne comprise entre ladite première zone où est créée l'émulsion, et le rétrécissement. L'émulsion obtenue passe ainsi dans l'enceinte de petit volume avant rétrécissement et floculation. A noter que la première zone et l'enceinte peuvent également être séparées par une restriction (un venturi et/ou un orifice) formant les deux zones en deux chambres séparées. Par petit volume on entend quelques dizaines de litres, c'est-à-dire inférieur à 100 l ;
- l'enceinte est une colonne de diamètre moyen d et de hauteur H ≥ 3 d, la boue étant introduite en partie basse de la colonne dans le lit gazeux créé par l'air injecté au niveau de ladite alimentation en boue (par exemple en dessus ou en dessous) ;
- l'enceinte est tubulaire de section moyenne de passage comprise entre 20 cm et 80 cm ;
- les moyens de filtration et/ou décantation comportent un concentrateur de boues par flottation/tassement de l'émulsion floculée dans une capacité faisant office de concentrateur, et des moyens d'évacuation en continu par gravité de la boue concentrée par exemple par surverse ;
- la capacité est cylindrique ;
- la capacité est formée par un bac horizontal parallélépipédique ;
- le dispositif comporte des moyens de traitement complémentaire du floc en aval des moyens de dégazage par filtration et/ou pressage ;
- les moyens de traitement complémentaire comprennent un tambour rotatif de dégrillage ;
- ils comportent de plus une plaque supplémentaire de pressage du floc sur le tambour.

L'invention sera mieux comprise à la lecture de la description qui suit de modes de réalisation donnés ci-après à titre d'exemples non limitatifs. La description se réfère aux dessins qui l'accompagnent dans lesquels :
La figure 1 est un schéma illustrant un premier mode de réalisation du procédé selon l'invention.
La figure 2 illustre schématiquement en coupe le dégazeur/maturateur du dispositif selon le mode de réalisation de l'invention plus particulièrement décrit ici.

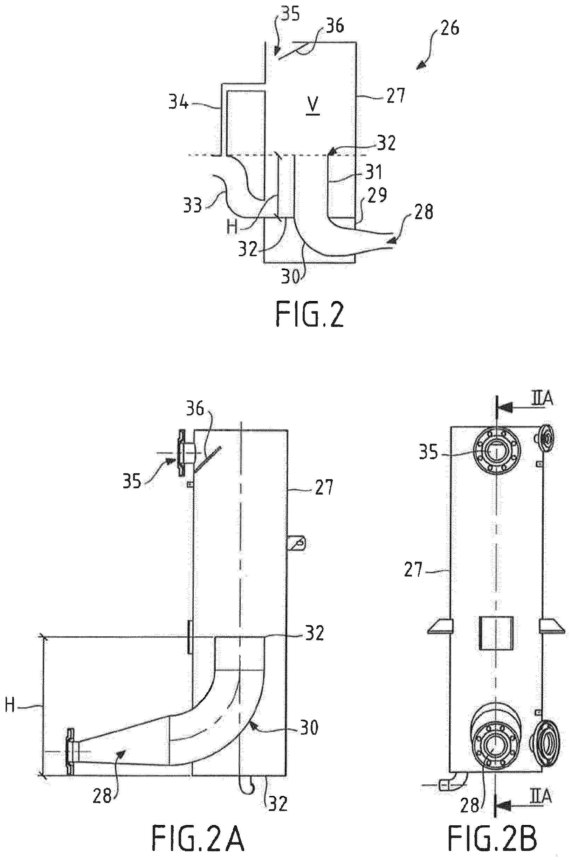

Les figures 2 et 2A sont des vues de face et en coupe selon IIA-IIA d'un mode de réalisation du dégazeur/maturateur du dispositif du type décrit en référence à la figure 2.
Les vues 3 et 3A sont des vues de dessus et en coupe selon IIIA - IIIA d'un autre mode de réalisation du dégazeur/maturateur avec paroi de freinage.

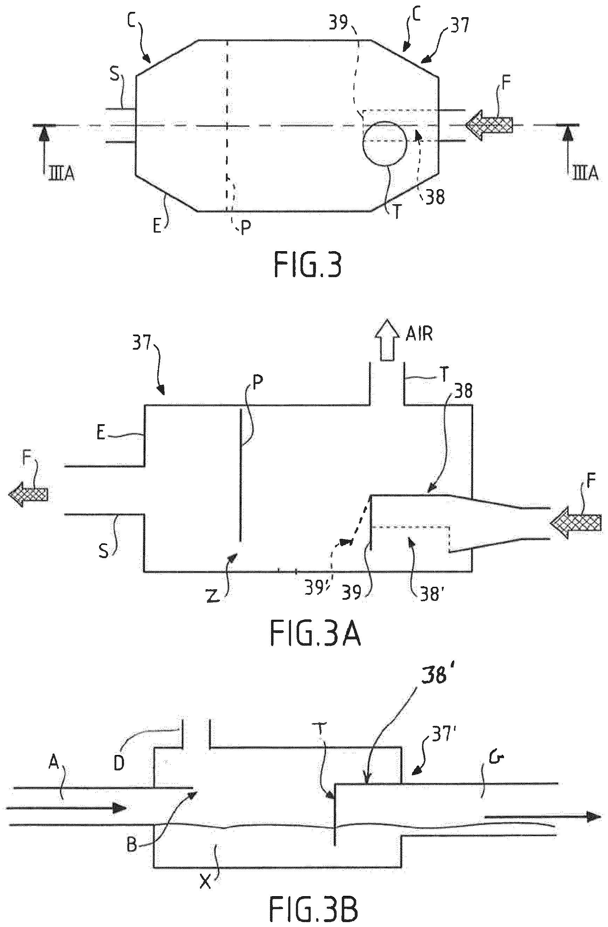

La figure 3B est une vue schématique d'une variante de réalisation du dégazeur/maturateur avec paroi de freinage.

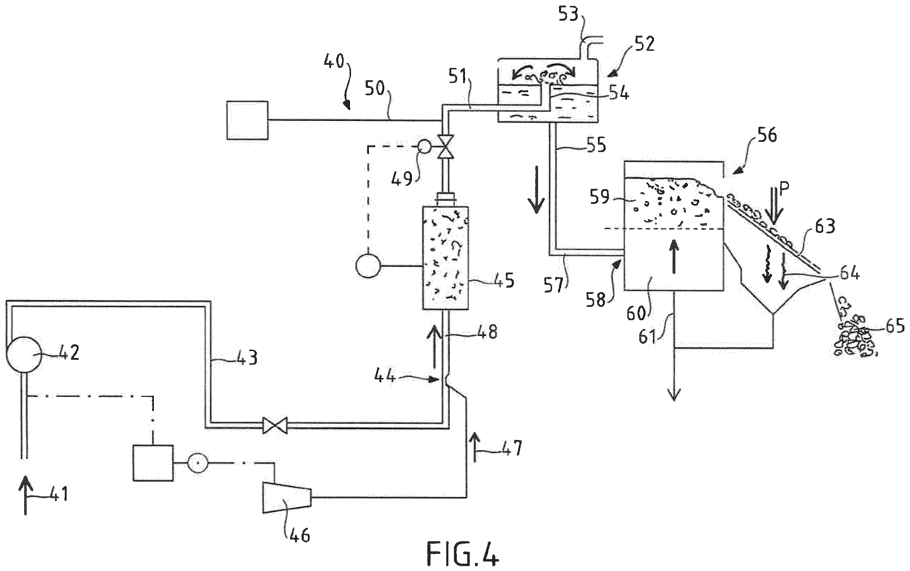

La figure 4 montre schématiquement un autre mode de réalisation du dispositif selon l'invention avec concentrateur.

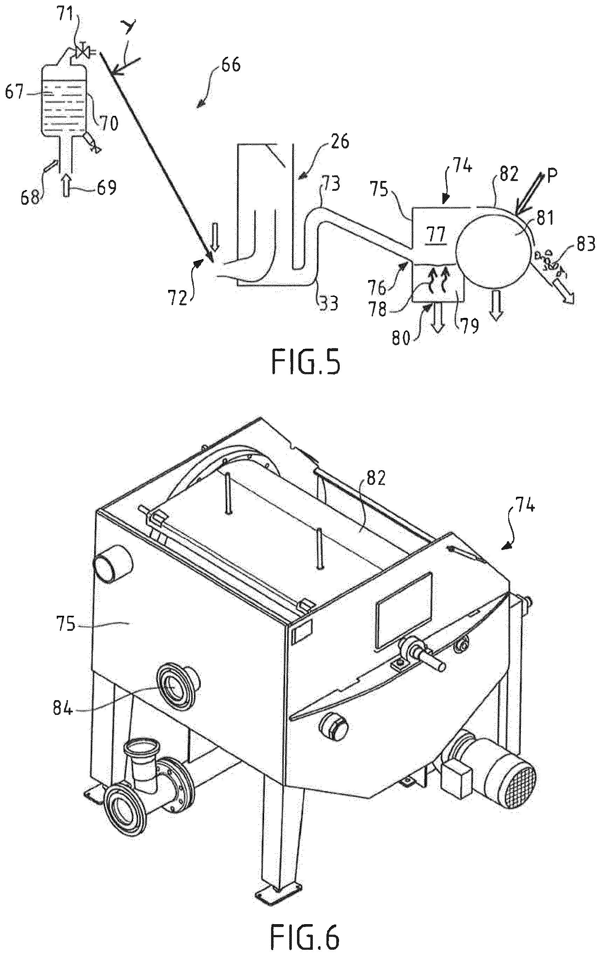

La figure 5 montre schématiquement un autre mode de réalisation du dispositif selon l'invention avec concentrateur à tambour rotatif.

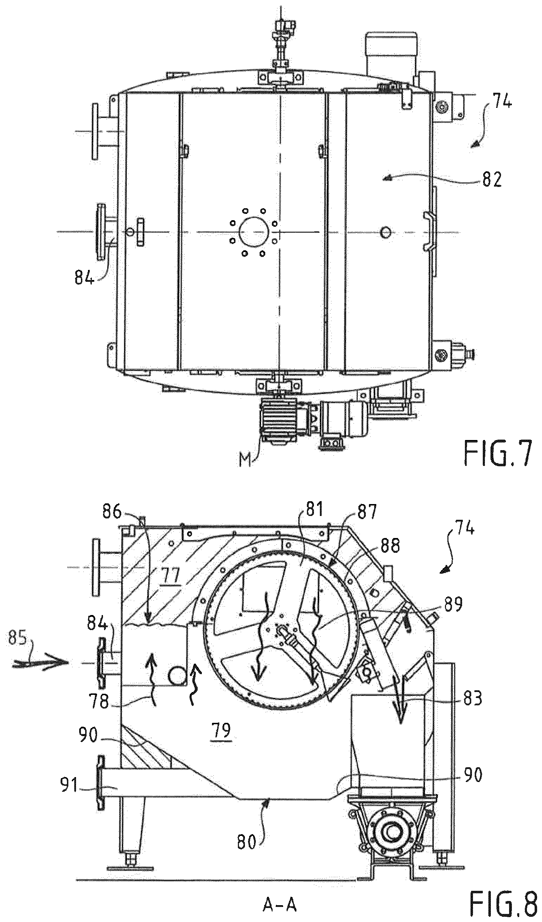

Les figures 6, 7 et 8 sont des vues en perspective, de dessus et en coupe selon VIII-VIII du concentrateur à tambour de la figure 5.

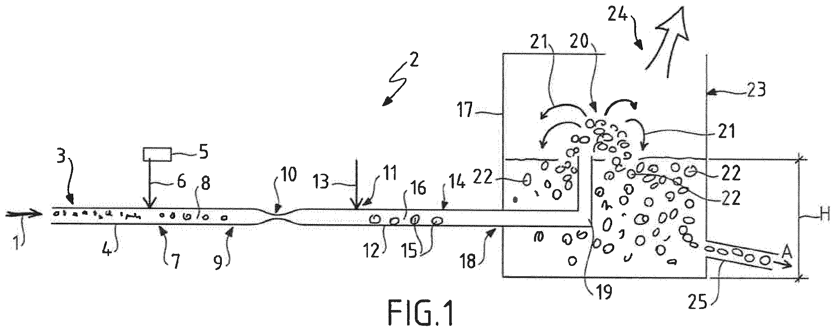

La figure 1 montre schématiquement le fonctionnement du procédé de traitement de boue selon un premier mode de réalisation de l'invention.

La boue 1 est introduite en continu à un débit Q (m3/h) par exemple compris entre 10 et 50 m3/h, mais des débits plus importants peuvent être prévus, comme par exemple 100 m³/h, dans le dispositif 2.

Plus précisément la boue est par exemple pompée dans un bassin (non représenté) et alimente une première partie 3 de circuit, par exemple formée par une tuyauterie 4, par exemple de diamètre nominal interne compris entre 5 et 15 cm, rectiligne ou sensiblement rectiligne, par exemple horizontale de quelques mètres de longueur, à une pression par exemple de 1 à 3 bars relatifs.

Des moyens 5 d'injection d'air 6 (par exemple un compresseur) à une pression déterminée, par exemple comprise entre 0,2 bars et 2 bars au-dessus de la pression d'alimentation de la boue, et à un débit q' (Nm3/h), par exemple de 50 Nm3/h (avantageusement q' ≥ 2Q), sont prévus dans une première zone 7 de la tuyauterie.

Par Nm3/h (Normomètre cube par heure) on entend un début aux conditions normales, c'est-à-dire et par exemple 15°C à la pression atmosphérique.

L'injection se fait avantageusement dans le sens du flux de boue ce qui permet d'augmenter la vitesse de l'émulsion 8 triphasique d'air, de matières solides et d'eau obtenue en aval.

Dans le mode de réalisation représenté sur la figure 1, la première zone 7 est par exemple une partie de tuyauterie de même diamètre que le reste de la tuyauterie 4.

Mais avantageusement la première zone 7 peut être de plus petite section que le reste de la tuyauterie, par exemple formée par la partie centrale d'un venturi (de 1 à 10 cm de longueur par exemple) ou plus généralement par une portion de plus petit diamètre formant une restriction de la tuyauterie, par exemple de diamètre deux à dix fois inférieur à celui du reste de ladite tuyauterie.

La taille particulièrement réduite du volume de la zone d'injection (par exemple inférieur à 1 litre) va autoriser un excellent mélange boue/air.

Il y a en effet à cet endroit une zone de grande vitesse, entraînant des chocs cinétiques, qui permet à la boue d'éclater dans le gaz.

L'émulsion 8 tri phasique d'air, de matière solide (essentiellement organique) et d'eau ainsi obtenue passe ensuite dans une deuxième zone 9 du circuit par exemple formé par une tuyauterie qui s'étend sur une certaine longueur l (par exemple de quelques centimètres à 1 ou 2 mètres) avant une restriction 10, du même type que la première zone qui vient d'être décrite.

La deuxième zone peut être également formée, comme on le verra ci-après en référence à la figure 4, au moins en partie par une enceinte. L'émulsion 8 dans ladite deuxième zone, en aval de la première zone et avant la restriction 10 (qui peut être formée par une vanne à ouverture variable) est ainsi formée d'une multitude de gouttelettes de boues dans un courant d'air.

Dans le mode décrit ici on crée donc une perte de charge déterminée dans l'émulsion par rétrécissement dans et/ou en sortie de la deuxième zone grâce à la restriction 10, ce qui favorise encore le mélange boue/air de l'émulsion.

On introduit ensuite en 11 (par exemple via une pompe de façon connue en elle-même) dans une troisième zone formée par la suite 12 de la tuyauterie, un floculant 13, par exemple un floculant organique, par exemple un polymère du type cationique, pour créer un floc 14 comportant des flocons 15 de particules de boue agrégée dans un courant d'air 16 et/ou mélangées avec un grand nombre de bulles d'air.

L'émulsion floculée est à ce stade très énergétique car elle est formée dans un espace restreint formé par la suite de la tuyauterie précédente ou une nouvelle tuyauterie 15 véhiculant le floc, du fait de l'importante quantité d'air et ce à un débit qui reste important malgré les pertes de charge en amont.

Le débit observé est en effet sensiblement égal à Q + q avec un risque de démolition du floc qui croit avec la longueur de cette deuxième tuyauterie qu'on prévoit donc avantageusement de longueur réduite par exemple inférieure à 1 m et sans accidents (coudes).

Selon le mode de réalisation de l'invention plus particulièrement décrit ici, le floc ou émulsion floculée est alors introduit dans un pot ou récipient 17 dégazeur, par le bas 18, via une partie coudée de tuyauterie 19 agencée pour faire sortir le floc en fontaine dans le récipient, ou en jets verticaux 20 qui retombent en pluie (flèches 21) sur les flocons 22 déjà évacués par ce biais, ce qui crée un choc mou de l'émulsion floculée ou floc sur lui-même.

Ce faisant une bonne partie de l'air qui jouait à la fois un rôle d'entrainement dynamique du flux de boue et un rôle d'aération de celle-ci, se trouve brusquement évacué par dégazage naturel et forcé en partie haute 23 du récipient 17 ouvert en 24 à l'atmosphère.

Le choc mou permet quant à lui une sorte de brassage naturel et doux du floc autorisant un dégazage suffisant sans abîmer les flocons qui restent légers et propices à une bonne déshydratation par écoulement d'eau délié.

Les dimensions respectives de la hauteur H de boue dans le récipient, de largeur et/ou dimension du récipient /dégazeur 17, et de la sortie d'évacuation 25 en partie basse du récipient (par gravité) vers un dispositif de séparation par flottation (non représenté), sont calculées pour permettre une bonne maturation des boues ainsi floculées.

Par bonne maturation il faut entendre la fixation stable et forte des molécules de polymère sur les flocs bactériens, de sorte d'établir une macrostructure organique compacte qui peut se séparer de l'eau déliée.

La Figure 2 montre schématiquement en coupe un dégazeur 26 selon un mode de réalisation de l'invention.

Le dégazeur comporte un récipient 27 par exemple cylindrique, de hauteur sensiblement égale à 1 m.

Le diamètre du récipient est par exemple compris entre 200 et 300 millimètres.

La boue est alimentée en 28 par une tuyauterie par exemple de diamètre 80 mm qui pénètre en partie basse 29 du récipient puis présente un coude 30 à 90° et une partie verticale cylindrique 31 par exemple de diamètre 100.

La partie verticale cylindrique 31 se termine par un col 32 de sortie de la boue en fontaine.

Le récipient définit un volume interne V dans lequel débouche la tuyauterie cylindrique 31.

Le volume présente un fond 32 muni d'une tuyauterie 33 de sortie de diamètre identique à la tuyauterie d'entrée de l'émulsion floculée.

Avantageusement un piquage 34 de dégazage complémentaire du floc après passage dans le récipient en partie haute de la tuyauterie d'évacuation est prévu, ladite partie haute 35' étant à une hauteur inférieure au niveau de boue dans le récipient.

La hauteur de la partie haute 35' est agencée pour être égale ou légèrement inférieure à celle du col, par rapport au fond du volume V, pour permettre un temps de séjour/maturation du floc dans le dégazeur déterminé, par exemple 20 s.

Le volume V se termine en partie haute par une ouverture 35 de sortie à l'atmosphère avantageusement protégée par un becquet 36 de blocage des projections de boue. Dans le mode de réalisation tel que décrit et avec les dimensions d'entrée/sortie des différentes tuyauteries d'alimentation de DN 80mm, la hauteur H du floc permettant sa maturation, c'est-à-dire entre le fond du récipient et la périphérie du col de la partie verticale cylindrique 31, est par exemple compris entre 400 et 600 mm par exemple 500 mm.

Dans la suite de la description on utilisera des numéros de référence identiques pour désigner des éléments identiques ou similaires.

On a représenté sur les figures 2 et 2A un autre mode de réalisation de dégazeur selon l'invention permettant le dégazage du floc par chocs mous du floc sur lui-même.

Il peut s'inscrire dans un parallélépipède de 1,50 m × 1 m × 600 mm, pour le traitement de boues alimentées en continu à un débit de 20 m3 et ce en utilisant des tuyauteries et/ou des tôles en matière plastique ou en acier du commerce, présente un grand intérêt.

En effet, par rapport à un simple dégazage par mise à l'atmosphère, ou encore en comparaison avec un dégazeur utilisant un brassage mécanique pour détacher l'air des flocons, on obtient une amélioration du temps de floculation sans destruction des flocons pouvant atteindre 20% voire 50% tout en fabriquant un floc plus stable que d'ordinaire.

Ainsi et par exemple, avec un dispositif du type décrit en référence à la figure 2, de 64l de volume utile max. (base carrée de 400 mm × 400 mm), un coude d'arrivée en DN 120 mm et un fonctionnement entre 5 à 12 m3/h (avec un débit d'air à 30 Nm3/h), on obtient un meilleur floc, très consistant et flottant, et ce beaucoup plus rapidement qu'avec l'art antérieur. Cela ressort notamment du tableau I ci-après, précisant également les conditions de hauteur de chute de la fontaine H (conditionnant le choc mou).

**TABLEAU I**

| Débit M3/h | Volume utile (l) et Temps de séjour utile (s) | Elévation de la fontaine par rapport au fond (H) |
|---|---|---|
| 5 | 58 / 42 | 35 à 40 |
| 5 | 58 / 42 | 35 à 40 |
| 5 | 58 / 42 | 35 à 40 |
| 10 | 60 / 22 | 40 à 45 |
| 10 | 60 / 22 | 40 à 45 |
| 10 | 60 / 22 | 40 à 45 |
| 12 | 62 / 19 | 45 à 50 |
| 12 | 62 / 19 | 45 à 50 |
| 12 | 62 / 19 | 45 à 50 |

Les figures 3 et 3A montrent en vue de dessus et en coupe selon IIIA - IIIA, un exemple de dégazeur maturateur 37 selon un autre mode de réalisation de l'invention, comprenant une enceinte E par exemple de forme parallélépipédique avec des coins coupés C, disposée horizontalement par rapport à l'arrivée du flux de floculant F, par exemple de dimension L × l × H : 300 × 400 × 300 pour un débit de traitement de 10-13 M³/h, un MS de 8 à 10 g/l et un Veff de 30 litres.

Le Veff : (Volume efficace) est un volume de boue/eau à l'entrée du démodulateur permettant d'absorber l'énergie nécessaire à la propagation et la maturation de l'émulsion.

Ce volume varie en fonction des différents dimensionnements.

Il est d'environ et par exemple de 30-40 litres.

L'enceinte E comprend une entrée du flux qui débouche dans une chambre 38 de passage, par exemple cylindrique, présentant une portion de cylindre 38' ouverte en partie basse, sur toute la longueur de la chambre (par exemple de 200 mm dans l'exemple numérique ci-dessus et munie à son extrémité dans le sens horizontal d'une paroi 39, propre à freiner le floc ou lorsque la paroi est souple à s'écarter vers l'intérieur 39' sous la pression douce du floc F.

L'enceinte comporte vers le haut un tube T, d'évacuation de l'air dégazeur, et un orifice de sortie S à l'autre extrémité. L'enceinte E peut, ou non, présenter par exemple au 2/3 de sa longueur, une paroi intermédiaire P, de répartition permettant l'évacuation du floc en partie basse, par une fente élargie Z.

Une telle paroi permet soit directement le freinage du floc, soit renforce encore l'homogénéité de l'émulsion.

On a représenté sur la figure 3B une variante du dégazeur maturateur 37' selon un autre mode de réalisation de l'invention, en longitudinal.

Si dans le cas de l'utilisation d'un dégazeur en combinaison avec un flottateur tel que décrit ci-après la paroi interne destinée à amortir le choc du mélange peut avantageusement être en caoutchouc ou autre matière molle, dans le cas de l'utilisation avec une filtre bande, comme traitement complémentaire, on utilisera par exemple une paroi plus rigide, par exemple de forme plus ou moins convexe, ce qui peut casser légèrement le floc fabriqué mais pas totalement, réduisant simplement la taille du floc et le rendant ainsi plus compressible.

Plus précisément, la variante de la figure 3B montre une arrivée A de l'émulsion et du gaz en excès dans une zone B de l'enceinte 37' remplie de boue X en partie basse et de gaz en partie haute.

La zone B est fermée par une paroi T amortissant l'énergie du flux, paroi souple ou dure (avantageusement convexe).

Le gaz en excès est extrait du ciel gazeux par une mise à l'air/évent D.

L'extraction du flux liquide sous versé par la paroi T s'effectue par la zone G qui propose un écoulement calme, laminaire, à par exemple moins d'1 m/s permettant au floc poreux de se mettre en suspension.

Pour 20 à 23 m³/h de boue chargée entre 10 et 30 g/l et jusqu'à 100 Nm3/h d'air ajouté pour former l'émulsion, l'enceinte est par exemple de dimensions L × l × H = 500 × 200 × 250 avec une pénétration dans l'enceinte du tube de sortie de 130 mm et une hauteur de paroi absorbante de 160 cm.

La figure 4 montre un autre mode de réalisation de dispositif 40 selon l'invention.

Les boues organiques liquides 41 sont introduites via une pompe d'alimentation 42 et une tuyauterie 43 vers une restriction 44 par exemple formée par un venturi dans une enceinte tubulaire 45 par exemple de hauteur 1 m et de diamètre 50 cm.

Un compresseur 46 alimente en air comprimé 47 l'intérieur du venturi 44, en biais par exemple avec un angle de 30° dans le sens du fluide, pour former une émulsion 48 ou mélange triphasique boue air eau.

L'enceinte tubulaire est par exemple maintenue à une pression de l'ordre de 1,2 à 2 bars relatifs.

Ceci peut se faire par l'intermédiaire d'une vanne régulée 49 en fonction de la pression interne de l'enceinte. Cette vanne 49 constitue une restriction en aval de laquelle est alimenté un floculant 50 via un dispositif doseur 51 d'alimentation connu en lui-même.

En aval de l'alimentation en floculant l'émulsion ainsi floculée 51 alimentent le dégazeur 52 selon le mode de réalisation de l'invention plus particulièrement décrit ici.

Le dégazeur de l'émulsion floculée ou floc est ouvert à la pression atmosphérique en 53 et comprend un tube vertical 54 d'alimentation en fontaine du floc permettant un choc mou du floc sur lui-même, ce qui permet un dégazage donné et non destructeur de l'émulsion floculée.

La boue reste pendant un temps déterminé à l'intérieur du dégazeur, par exemple de l'ordre de 1 à 5 minutes, puis est évacuée gravitairement via une tuyauterie 55 vers un appareil concentrateur 56.

L'émulsion dégazée 57 arrive ainsi en partie intermédiaire basse 58 de l'appareil et se sépare immédiatement en matière solide 59, qui monte en surface et en eau transparente 60, qui s'évacue en continu gravitairement en 61.

La matière solide 59 s'évacue en partie haute du concentrateur/flottateur 56 par exemple par une goulotte 62 qui permet l'évacuation de la boue déshydratée (matière solide) gravitairement sur un tapis ajouré 63 permettant un filtrage supplémentaire de l'eau résiduelle (flèches 64) récupérée pour être mélangée à l'eau déliée obtenue en 61.

Avantageusement on exerce sur la boue une pression P, de façon connue en elle-même, permettant d'augmenter encore la déshydratation et l'épaississement de la boue obtenue en sortie du dispositif.

La boue épaissie et déshydratée 65 est alors récupérée en aval du tapis. Elle permet de constituer un tas de boue épaissie particulièrement favorable à la constitution sous forme de pastilles asséchées et commercialisables en tant que telles.

Avec l'invention se produit dans l'appareil concentrateur 56, un phénomène de flottation immédiate, avec une vitesse ascensionnelle dans l'appareil des flocons, supérieure aux vitesses observées précédemment, 20 m/h, 50 m/h voire 100 m/h.

On a représenté sur la figure 5 un autre mode de réalisation schématique d'un dispositif 66 selon l'invention.

Celui-ci comporte un système de fabrication de l'émulsion triphasique 67 comprenant une alimentation en air 68 injecté dans une alimentation en boue 69 elle-même introduite dans une petite enceinte 70 terminée en partie haute par une restriction 71 d'alimentation en 72, après injection d'un floculant Y, du dégazeur 26 de la figure 2.

Ce dégazeur comme on l'a vu, joue également un rôle de maturateur pour la boue floculée obtenue dans le dispositif.

Cette boue floculée qui reste à l'intérieur du dégazeur pendant un temps déterminé, par exemple 20 s est ensuite alimentée via un coude 73 formant garde hydraulique, vers un appareil concentrateur 74.

Celui-ci comporte un boîtier sensiblement parallélépipédique 75 de réception de la boue floculée dégazée en partie médiane ou basse intermédiaire 76 de celui-ci (par exemple par un piquage situé à mi-hauteur).

La partie solide 77 se sépare immédiatement ou quasi instantanément (moins d'une seconde) (flèches 78) de l'eau transparente 79, qui est soutirée en partie basse 80 du boîtier par exemple en forme d'entonnoir.

La partie solide 77 quant à elle entraînée en partie haute par un tambour cylindrique 81 actionné par moteur par exemple électrique à une vitesse de rotation de quelques tours par minute.

Une plaque 82 de forme complémentaire à la surface périphérique cylindrique du tambour est prévue et exerce sur la boue floculée entraînée en rotation une pression P, par exemple de 25kg qui augmente encore le degré de siccité des matières solides obtenues en 83.

Grâce à l'invention il est ainsi possible d'obtenir de bien meilleurs résultats qu'avec un dégazeur cyclonique classique comme cela est montré au tableau I ci-avant.

On va maintenant décrire en référence aux figures 6 à 8 un mode de réalisation plus détaillé du concentrateur 74.

Il est formé d'un boîtier 75 sensiblement parallélépipédique par exemple s'inscrivant dans un parallélépipède de 1 m × 1.5 m × 1.5 m pour traiter par exemple un débit de 20m³/h de boue.

Le boîtier comprend un piquage 84 d'alimentation en boue floculée dégazée 85 situé à mi-hauteur, qui va alimenter le concentrateur 74 en boue, en dessous de la surface 86, située à une hauteur sensiblement constante dans le boîtier, de séparation entre matière solide 77 et liquide 79, et qui se forme quasi instantanément du fait de la vitesse ascensionnelle forte de la boue dans le boîtier 75 du dispositif 74 de flottation/séparation.

Les matières organiques 77 situées en partie haute du boîtier sont entraînées par la surface externe 87 du tambour rotatif 81, surface qui est formée par une grille 88 poreuse, entraînée en rotation par un moteur rotatif M autour d'un axe horizontal.

Cet effet d'entraînement des matières qui s'étalent sur le tambour permet d'extraire un débit de boue constant tout en permettant une extraction supplémentaire de l'eau au travers (flèches 89) du tambour ajouré, le surplus d'eau extraite rejoignant alors la partie inférieure 80 du boîtier par exemple en forme de bassin de récupération à parois 90 incliné vers le bas.

L'eau déliée 79 est quant à elle extraite par un piquage 91 situé du même côté que le piquage 84 d'introduction de la boue floculée dégazée.

Avantageusement on prévoit de plus une plaque pressante 82 munie de moyens 92 de pressage par exemple constituée de façon connue en elle-même par des vérins hydrauliques ou électriques 93.

Ainsi, lorsque la boue initiale est par exemple de concentration en matière sèche comprise entre 5 et 10 gramme par litre, la boue flottée 77 a une concentration entre 30 et 50g/l (de matière sèche).

On observe qu'en pressant avec la plaque 92 sur le média filtrant avec un seuil de coupure entre 500 et 1000 micromètres, la concentration va monter à 80, 90 voire 100g/l, et ce de façon surprenante, le traitement en amont avec le dégazeur ayant visiblement entraîné une constitution de boue autorisant un tel résultat.

La pression P exercée sur la boue doit être suffisante pour aider encore à l'extraction sans pour autant écraser la structure poreuse de la boue particulière obtenue.

Pour se faire, celle-ci est dosée et réglée en fonction des débits traités (et donc de la hauteur de la nappe de boue qui s'étale sur la face supérieure du tambour), de façon à la portée de l'homme du métier.

On va maintenant décrire en référence à la figure 4, la mise en oeuvre du procédé selon le mode de réalisation de l'invention plus particulièrement décrit ici.

La boue 41 est alimentée en débit continu par pompage à un débit Q, par exemple de 20m³/h, dans un tuyau par exemple de diamètre DN50 et de longueur 1 égale à quelques mètres. On injecte simultanément en continu un important débit d'air par exemple 60Nm3/h dans le venturi 44 ce qui crée l'émulsion triphasique, qui pénètre alors dans l'enceinte 45 en suppression. L'émulsion passe ensuite par la restriction 49, par exemple une vanne/soupape entraînant un nouveau choc de pression/dépression.

Un floculant, au taux de traitement nécessaire, est alors introduit pour créer le floc très aéré.

Celui-ci débouche en pluie dans le récipient dégazeur 52.

Le choc mou du floc sur lui-même permet un bon dégazage sans abîmer le floc qui reste, compte tenu des dimensions du tube coudé, du volume V et des débits, uniquement de quelques secondes (à quelques minutes) dans le récipient avant d'être évacué, ce qui engendre une excellente maturation.

Le floc maturé est ensuite transféré gravitairement au flottateur séparateur 56 dans lequel le floc monte quasi instantanément en surface de l'eau déliée (quelques secondes) ce qui laisse une ligne de flottaison a peu près définie. L'eau déliée, très claire est évacuée vers le bas.

Le floc (solide) est quant à lui évacué par le haut par surverse et entraînement gravitaire, ou par tambour comme décrit en référence à la figure 5, pour être pressé de façon complémentaire, puis évacué (tas de flocs 65).

Comme il va de soi et comme il résulte également de ce qui précède, la présente invention n'est pas limitée aux modes de réalisation plus particulièrement décrits. Elle en embrasse au contraire toutes les variantes et notamment celles où l'ensemble du dispositif est mobile, par exemple en étant monté sur une remorque de camion, compte tenu de sa très grande compacité. Cela permet de le véhiculer d'un site à l'autre en fonction des besoins.

## Revendications

1. Procédé de traitement / déshydratation en continu ou semi continu de boue organique (1, 41, 69), dans lequel on réalise une émulsion tri phasique d'air, de matière solide et d'eau en injectant de l'air (6, 47, 68) dans la boue, on introduit un floculant (13, 50, F) dans ladite émulsion pour créer un floc (14, 51), puis on dégaze ledit floc à la pression atmosphérique, et on récupère le floc ainsi maturé dans un dispositif (56, 74) de filtration et/ou décantation **caractérisé en ce que**, avant de récupérer le floc on dégaze et on flocule pour obtenir le dit floc ainsi maturé en utilisant comme énergie cinétique de maturation l'énergie cinétique dudit dégazage, ledit dégazage étant obtenu par sortie du floc verticalement ou sensiblement verticalement en fontaine (20) (ou en jet) dans un récipient ouvert (24, 53) à la pression atmosphérique ou par introduction du floc dans une chambre intermédiaire comprenant une paroi formant volet (39, C) de freinage du floc.

2. Procédé selon la revendication 1, **caractérisé en ce que** le col supérieur d'éjection en fontaine de la boue dans le récipient est agencé pour ménager un volume de boue dans la partie inférieure dudit récipient situé en dessous dudit col de façon à autoriser un temps déterminé optimisé et suffisant de maturation du floc.

3. Procédé selon la revendication 1, **caractérisé en ce que** la paroi (39) est souple.

4. Procédé selon l'une quelconque des revendications précédentes, **caractérisé en ce que** on introduit le floculant (13, 50, F) dans l'émulsion tri-phasique après création d'une perte de charge (10, 49, 71) dans l'émulsion par rétrécissement.

5. Procédé selon l'une quelconque des revendications précédentes, **caractérisé en ce que** la boue étant alimentée en continu à un débit Q (m3/h), on crée l'émulsion par choc de la boue avec l'air injecté dans la boue à un débit q (Nm3/h) tel que q > 3Q dans une première zone (7, 44) d'écoulement de la boue.

6. Procédé selon la revendication 5, **caractérisé en ce que** la première zone (44) est un petit volume notamment confiné entre deux parois latérales inférieur à 0,005 m3.

7. Procédé selon l'une quelconque des revendications précédentes **caractérisé en ce que** on fait ensuite passer l'émulsion dans une enceinte (45, 70) de petit volume inférieur à 100 l, avant ladite création de perte de charge par rétrécissement.

8. Procédé selon l'une quelconque des revendications précédentes, **caractérisé en ce que** l'enceinte (45) est tubulaire de section moyenne de passage comprise entre 20 cm et 80 cm.

9. Procédé selon la revendication 7 et 8, **caractérisé en ce que** l'enceinte (45) est une colonne de diamètre moyen d et de hauteur H > 3 d, la boue étant introduite en partie basse de la colonne dans le lit gazeux créé par l'air injecté au niveau de ladite alimentation en boue.

10. Procédé selon l'une quelconque des revendications précédentes, **caractérisé en ce que** le floculant (13, 50, F) est un polymère injecté en sortie immédiate du récipient, avant la mise à l'atmosphère.

11. Procédé selon l'une quelconque des revendications précédentes, **caractérisé en ce que** on effectue une concentration du floc après dégazage dans le dispositif de filtration et/ou décantation par flottation/tassement de l'émulsion floculée dans une capacité (56, 74) faisant office de concentrateur, la boue concentrée étant évacuée en continue.

12. Procédé selon la revendication 11, **caractérisé en ce que** la capacité est cylindrique.

13. Procédé selon la revendication 12, **caractérisé en ce que** la capacité est formée par un bac parallélépipédique horizontal.

14. Procédé selon l'une quelconque des revendications précédentes, **caractérisé en ce que** on effectue un traitement complémentaire du floc en aval du dégazage par filtration et/ou pressage du floc.

15. Procédé selon la revendication 14, **caractérisé en ce que** le traitement complémentaire comprend le passage du floc sur un tambour (81) rotatif de dégrillage.

16. Procédé selon la revendication 15, **caractérisé en ce que** le traitement comprend de plus un pressage supplémentaire (P) avec une pression comprise entre 10 kg et 40 kg.

17. Procédé selon l'une quelconque des revendications précédentes, **caractérisé en ce que** l'air est injecté dans le sens du flux de boue.

18. Dispositif (2, 40, 66) de traitement et/ou de déshydratation de boues liquides organiques (1, 41, 69) comportant des moyens (42) d'alimentation en boue en continu à un premier débit q (m3/h), des moyens (46) d'alimentation en air à un débit Q'(Nm3/h) dans la boue, pour former une émulsion (8), des moyens d'alimentation en floculant (13) dans l'émulsion pour former un floc (14, 51) et des moyens (56, 74) de filtration et/ou de décantation dudit floc agencés pour séparer la partie liquide (60, 79) des matières (59, 77) en suspension et la récupérer en continu, **caractérisé en ce qu'**il comprend des moyens (17, 26, 37, 37', 52) de dégazage et de floculation dudit floc à la pression atmosphérique comprenant un récipient (17, 27, E, 37, 37') ouvert à la pression atmosphérique et une alimentation (19, 54) du floc par sortie du floc verticalement ou sensiblement verticalement en fontaine dans ledit récipient ouvert à la pression atmosphérique ou **en ce que** les moyens (37, 37') de dégazage comprennent une enceinte (E) de passage du floc munie d'une chambre (38, 38') d'introduction ou de sortie intermédiaire comprenant une paroi (39, T) de freinage du flux.

19. Dispositif selon la revendication 18, **caractérisé en ce que** la paroi (39, T) de freinage est souple.

20. Dispositif selon l'une quelconques des revendication 18 et 19 **caractérisé en ce que** il comporte des moyens (10, 49, 71) de création d'une perte de charge dans l'émulsion par rétrécissement avant injection du floculant.

21. Dispositif selon l'une quelconque des revendications 18 à 20, **caractérisé en ce que** la boue étant alimentée en continu à un débit Q (m3/h), le dispositif comporte une première zone (7, 44) d'écoulement de la boue dans laquelle on crée l'émulsion par choc de la boue avec l'air injecté dans la boue à un débit q (Nm3/h).

22. Dispositif selon la revendication 21, **caractérisé en ce que** la première zone (44) est un petit volume notamment confiné entre deux parois latérales comme dans un venturi ou une restriction de tuyauterie, inférieur à 0,005 m³.

23. Dispositif selon l'une quelconque des revendications 18 à 22, **caractérisé en ce que** les moyens de filtration et/ou de décantation comportent une enceinte (45, 70) en ligne comprise entre ladite première zone où est créée l'émulsion, et le rétrécissement.

24. Dispositif selon les revendications 18 à 22, **caractérisé en ce que** l'enceinte (45, 70) est une colonne de diamètre moyen d et de hauteur H ≥ 5 d, la boue étant introduite en partie basse de la colonne dans le lit gazeux créé par l'air injecté au niveau de ladite alimentation en boue (par exemple en dessus ou en dessous).

25. Dispositif selon la revendication 24 **caractérisé en ce que** l'enceinte (45, 70) est tubulaire de section moyenne de passage comprise entre 20 cm et 80 cm.

26. Dispositif selon l'une quelconque des revendications 18 à 25, **caractérisé en ce que** il comporte un concentrateur (56, 74) de boues par flottation/tassement de l'émulsion floculée dans une capacité faisant office de concentrateur, et des moyens d'évacuation en continu par gravité de la boue concentrée par surverse.

27. Dispositif selon l'une quelconque des revendications 18 à 26, **caractérisé en ce que** il comporte des moyens (74) de traitement complémentaire du floc en aval des moyens de dégazage par filtration et/ou pressage.

28. Dispositif selon la revendication 27, **caractérisé en ce que** les moyens (74) de traitement complémentaire comprennent un tambour (81) rotatif de dégrillage.

29. Dispositif selon la revendication 28, **caractérisé en ce que** les moyens de traitement complémentaires comportent de plus une plaque (82) supplémentaire de pressage du floc sur le tambour (81).

## Patentansprüche

1. Verfahren zur kontinuierlichen oder halbkontinuierlichen Behandlung/ Entwässerung von organischem Schlamm (1, 41, 69), bei dem man eine dreiphasige Emulsion aus Luft, Feststoff und Wasser herstellt, indem man Luft (6, 47, 68) in den Schlamm einspritzt, ein Flockungsmittel (13, 50, F) in die Emulsion einführt, um eine Flocke (14, 51) zu erzeugen, dann die Flocke bei Atmosphärendruck entgast und die so gereifte Flocke in einer Vorrichtung (56, 74) zur Filtration und/oder Dekantierung, zurück gewinnt **dadurch gekennzeichnet, dass** man vor der Gewinnung der Flocke die Flocke durch Austritt der Flocke vertikal oder im Wesentlichen vertikal als Fontäne (20) (oder Strahl) in einem offenen Behälter (24, 53) bei atmosphärischem Druck oder durch Einführung der Flocke in eine Zwischenkammer mit einer Wand, die eine Klappe (39, C) zum Abbremsen der Flocke bildet, entgast.

2. Verfahren nach Anspruch 1, **dadurch gekennzeichnet, dass** ein oberer Hals für den Fontänenausstoß des Schlamms in den Behälter so beschaffen ist, dass ein Schlammvolumen im unteren Teil des Behälters, der sich unterhalb des Halses befindet, erhalten bleibt, um eine optimierte und ausreichend bestimmte Zeit für die Reifung der Flocke zuzulassen.

3. Verfahren nach Anspruch 1, **dadurch gekennzeichnet, dass** die Wand (39) flexibel ist.

4. Verfahren nach einem der vorhergehenden Ansprüche, **dadurch gekennzeichnet, dass** man das Flockungsmittel (13, 50, F) in die Dreiphasenemulsion einbringt, nachdem durch Schrumpfung ein Druckverlust (10, 49, 71) in der Emulsion erzeugt wurde.

5. Verfahren nach einem der vorhergehenden Ansprüche, **dadurch gekennzeichnet, dass** bei kontinuierlicher Zufuhr des Schlamms mit einer Durchflussmenge Q (m³/h) die Emulsion durch Aufprall des Schlamms mit der Luft erzeugt wird, die mit einer Durchflussmenge q (Nm³/h) in den Schlamm eingeblasen wird, so dass q > 3Q in einer ersten Zone (7, 44) des Schlammflusses ist.

6. Verfahren nach Anspruch 5, **dadurch gekennzeichnet, dass** die erste Zone (44) ein kleines, insbesondere zwischen zwei Seitenwänden eingeschlossenes Volumen von weniger als 0,005 m³ ist.

7. Verfahren nach einem der vorhergehenden Ansprüche, **dadurch gekennzeichnet, dass** man die Emulsion anschließend in eine Kammer (45, 70) mit einem kleinen Volumen von weniger als 100 1 leitet, vor der genannten Erzeugung eines Druckverlusts durch Verengung.

8. Verfahren nach einem der vorhergehenden Ansprüche, **dadurch gekennzeichnet, dass** die Kammer (45) rohrförmig ist und einen mittleren Durchgangsquerschnitt zwischen 20 cm und 80 cm aufweist.

9. Verfahren nach einem der Ansprüche 7 und 8, **dadurch gekennzeichnet, dass** die Kammer (45) eine Säule mit einem mittleren Durchmesser d und einer Höhe H > 3 d ist, wobei der Schlamm im unteren Teil der Säule in das Gasbett eingeleitet wird, das durch die an der Schlammzufuhr eingeblasene Luft erzeugt wird.

10. Verfahren nach einem der vorhergehenden Ansprüche, **dadurch gekennzeichnet, dass** das Flockungsmittel (13, 50, F) ein Polymer ist, das vor der Entlüftung in den unmittelbaren Auslauf des Behälters eingespritzt wird.

11. Verfahren nach einem der vorhergehenden Ansprüche, **dadurch gekennzeichnet, dass** eine Konzentration der Flocke nach der Entgasung in der Filter- und/oder Dekantiervorrichtung durch Flotation/Packung der ausgeflockten Emulsion in einem als Konzentrator fungierenden Rauminhalt (56, 74) durchgeführt wird, wobei der konzentrierte Schlamm kontinuierlich abgeführt wird.

12. Verfahren nach Anspruch 11, **dadurch gekennzeichnet, dass** der Rauminhalt zylindrisch ist.

13. Verfahren nach Anspruch 12, **dadurch gekennzeichnet, dass** der Rauminhalt durch eine horizontale quaderförmige Wanne gebildet wird.

14. Verfahren nach einem der vorhergehenden Ansprüche, **dadurch gekennzeichnet, dass** eine zusätzliche Behandlung der Flocke nach der Entgasung durch Filtern und/oder Pressen der Flocke durchgeführt wird.

15. Verfahren nach Anspruch 14, **dadurch gekennzeichnet, dass** die Nachbehandlung das Leiten der Flocke über eine rotierende Trommel (81) zur Rechenreinigung umfasst.

16. Verfahren nach Anspruch 15, **dadurch gekennzeichnet, dass** die Behandlung zusätzlich ein weiteres Pressen (P) mit einem Druck zwischen 10 kg und 40 kg umfasst.

17. Verfahren nach einem der vorhergehenden Ansprüche, **dadurch gekennzeichnet, dass** die Luft in Richtung des Schlammstroms eingeblasen wird.

18. Vorrichtung (2, 40, 66) zur Behandlung und/oder Entwässerung von organischen Flüssigschlämmen (1, 41, 69) mit Mitteln (42) zur kontinuierlichen Zufuhr von Schlamm mit einem ersten Durchsatz q (m³/h), mit Mitteln (46) zur Zufuhr von Luft mit einem Durchsatz Q' (Nm³/h) in den Schlamm, um eine Emulsion (8) zu bilden, mit Mitteln zur Zufuhr von Flockungsmittel (13) in die Emulsion, um eine Flocke (14, 51) zu bilden, und mit Mitteln (56, 74) zum Filtern und/oder Dekantieren der Flocke, die so beschaffen sind, dass sie den flüssigen Teil (60, 79) von den suspendierten Stoffen (59, 77) trennen und kontinuierlich zurückgewinnen, **dadurch gekennzeichnet, dass** es Mittel (17, 26, 37, 37', 52) zum Entgasen der Flocke bei atmosphärischem Druck umfasst, die einen Behälter (17, 27, E, 37, 37'), der zum atmosphärischen Druck geöffnet ist, und eine Zufuhr (19, 54) der Flocke durch Austritt der Flocke vertikal oder im Wesentlichen vertikal als Fontäne in dem offenen Behälter bei Atmosphärendruck oder dadurch, dass die Mittel (37, 37') zur Entgasung eine Kammer (E) zum Durchgang der Flocke umfassen, die mit einer Kammer (38, 38') zur Einführung oder zum Zwischenaustritt versehen ist, die eine Wand (39, T) zur Bremsung des Flusses umfasst.

19. Vorrichtung nach Anspruch 18, **dadurch gekennzeichnet, dass** die Bremswand (39, T) flexibel ist.

20. Vorrichtung nach einem der Ansprüche 18 oder 19, **dadurch gekennzeichnet, dass** sie Mittel (10, 49, 71) zur Erzeugung eines Druckverlustes in der Emulsion durch Schrumpfung vor der Injektion des Flockungsmittels umfasst.

21. Vorrichtung nach einem der Ansprüche 18 bis 20, **dadurch gekennzeichnet, dass**, da der Schlamm kontinuierlich mit einer Durchflussmenge Q (m³/h) zugeführt wird, die Vorrichtung eine erste Zone (7, 44) zum Abfließen des Schlamms umfasst, in der die Emulsion durch Aufprall des Schlamms mit der Luft erzeugt wird, die mit einer Durchflussmenge q (Nm³/h) in den Schlamm eingeblasen wird.

22. Vorrichtung nach Anspruch 21, **dadurch gekennzeichnet, dass** die erste Zone (44) ein kleines Volumen ist, das insbesondere zwischen zwei Seitenwänden wie in einem Venturirohr oder einer Rohrdrossel eingeschlossen ist und weniger als 0,005 m³ beträgt.

23. Vorrichtung nach einem der Ansprüche 18 bis 22, **dadurch gekennzeichnet, dass** die Filter- und/oder Dekantierungsmittel eine Einfassung (45, 70) in einer Linie umfassen, die zwischen der ersten Zone, in der die Emulsion erzeugt wird, und der Verengung enthalten ist.

24. Vorrichtung nach den Ansprüchen 18 bis 22, **dadurch gekennzeichnet, dass** die Einfassung (45, 70) eine Säule mit einem mittleren Durchmesser d und einer Höhe H > 5 d ist, wobei der Schlamm im unteren Teil der Säule in das Gasbett eingeleitet wird, das durch die in Höhe der Schlammzufuhr (z. B. oben oder unten) eingeblasene Luft erzeugt wird.

25. Vorrichtung nach Anspruch 24, **dadurch gekennzeichnet, dass** die Kammer (45, 70) rohrförmig ist und einen mittleren Durchgangsquerschnitt zwischen 20 cm und 80 cm aufweist.

26. Vorrichtung nach einem der Ansprüche 18 bis 25, **dadurch gekennzeichnet, dass** sie einen Schlammkonzentrator (56, 74) durch Flotation/Komprimierung der ausgeflockten Emulsion in einem als Konzentrator fungierenden Rauminhalt und Mittel zur kontinuierlichen Abführung des konzentrierten Schlamms durch Schwerkraft über einen Überlauf umfasst.

27. Vorrichtung nach einem der Ansprüche 18 bis 26, **dadurch gekennzeichnet, dass** sie Mittel (74) zur zusätzlichen Behandlung der Flocke stromabwärts der Entgasungsmittel durch Filtration und/oder Pressung umfasst.

28. Vorrichtung nach Anspruch 27, **dadurch gekennzeichnet, dass** die Mittel (74) zur Nachbehandlung eine rotierende Trommel (81) zur Rechenreinigung umfassen.

29. Vorrichtung nach Anspruch 28, **dadurch gekennzeichnet, dass** die Mittel zur ergänzenden Behandlung außerdem eine zusätzliche Platte (82) zum Pressen der Flocke auf die Trommel (81) umfassen.

## Claims

1. Method for continuous or semi-continuous treatment/dehydration of organic sludge (1, 41, 69), wherein a three-phase emulsion is produced of air, solid material and water, by injecting air (6, 47, 68) into the sludge, a flocculant (13, 50, F) is introduced into said emulsion in order to create a floc (14, 51), then said floc is degassed at atmospheric pressure, and the floc thus matured is recuperated into a filtration and/or decantation device (56, 74), **characterized in that**, before recuperating the floc, degassing and flocculation take place in order to obtain said floc thus matured using the kinetic energy of said degassing as the kinetic maturing energy, said degassing being obtained by exiting of the floc vertically or substantially vertically in the form of a fountain (20) (or a jet) into an open container (24, 53) at atmospheric pressure or by introduction of the floc into an intermediate chamber comprising a wall forming the shutter (39, C) for braking of the floc.

2. Method according to Claim 1, **characterized in that** the upper neck for ejection of the sludge in the form of a fountain into the container is designed to provide a volume of sludge in the low part of said container situated below said neck, such as to make possible an determined time which is optimized and sufficient for maturation of the floc.

3. Method according to Claim 1, **characterized in that** the wall (39) is flexible.

4. Method according to any one of the preceding claims, **characterized in that** the flocculant (13, 50, F) is introduced into the three-phase emulsion after creation of a loss of load (10, 49, 71) in the emulsion by contraction.

5. Method according to any one of the preceding claims, **characterized in that**, with the sludge being supplied continuously at a flow rate Q (m3/h), the emulsion is created by impact of the sludge with the air injected into the sludge at a flow rate q (Nm3/h), such that q ≥ 3Q in a first area of flow (7, 44) of the sludge.

6. Method according to Claim 5, **characterized in that** the first area (44) is a small volume which in particular is confined between two lateral walls, which volume is smaller than 0.005 m3.

7. Method according to any one of the preceding claims, **characterized in that** the emulsion is then passed into an enclosure (45, 70) with a small volume, smaller than 100 1, before said creation of loss of load by contraction.

8. Method according to any one of the preceding claims, **characterized in that** the enclosure (45) is tubular, with a mean cross-section of passage contained between 20 cm and 80 cm.

9. Method according to Claims 7 and 8, **characterized in that** the enclosure (45) is a column with a mean diameter d and a height H > 3 d, the sludge being introduced into the low part of the column in the gaseous bed created by the air injected at the level of said supply of sludge.

10. Method according to any one of the preceding claims, **characterized in that** the flocculant (13, 50, F) is a polymer which is injected at the immediate output of the container, before venting to atmosphere.

11. Method according to any one of the preceding claims, **characterized in that** the floc is concentrated after degassing in the filtration and/or decantation device by flotation/settling of the flocculated emulsion in a volume (56, 74) acting as a concentrator, with the concentrated sludge being discharged continuously.

12. Method according to Claim 11, **characterized in that** the volume is cylindrical.

13. Method according to Claim 12, **characterized in that** the volume is formed by a parallelepiped horizontal vat.

14. Method according to any one of the preceding claims, **characterized in that** a complementary treatment of the floc is carried out downstream from the degassing by filtration and/or pressing of the floc.

15. Method according to Claim 14, **characterized in that** the complementary treatment comprises the passage of the floc onto a rotary screening drum (81).

16. Method according to Claim 15, **characterized in that** the treatment additionally comprises supplementary pressing (P), with pressure contained between 10 kg and 40 kg.

17. Method according to any one of the preceding claims, **characterized in that** the air is injected in the direction of the flow of sludge.

18. Device (2, 40, 66) for treatment and/or dehydration of liquid organic sludges (1, 41, 69) comprising means (42) for continuous supply of sludge at a first flow rate q (m3/h), means (46) for supply of air at a flow rate Q' (Nm3/h) into the sludge, in order to form an emulsion (8), means for supply of flocculant (13) into the emulsion in order to form a floc (14, 51), and means (56, 74) for filtration and/or decantation of said floc designed to separate the liquid part (60, 79) of the materials (59, 77) in suspension and recuperate it continuously, **characterized in that** it comprises means (17, 26, 37, 37', 52) for degassing and for flocculating said floc at atmospheric pressure comprising a container (17, 27, E, 37, 37') which is open to atmospheric pressure, and a supply (19, 54) of the floc by exiting of the floc vertically or substantially vertically in the form of a fountain into said container which is open to atmospheric pressure, or **in that** the degassing means (37, 37') comprise an enclosure (E) for passage of the floc, provided with an introduction or intermediate output chamber (38, 38') comprising a wall (39, T) for braking of the flow.

19. Device according to Claim 18, **characterized in that** the braking wall (39, T) is flexible.

20. Device according to either one of Claims 18 and 19, **characterized in that** it comprises means (10, 49, 71) for creation of a loss of load in the emulsion by contraction before injection of the flocculant.

21. Device according to any one of Claims 18 to 20, **characterized in that**, with the sludge being supplied continuously at a flow rate Q (m3/h), the device comprises a first area (7, 44) of flow of the sludge, in which the emulsion is created by impact of the sludge with the air injected into the sludge at a flow rate q (Nm3/h).

22. Device according to Claim 21, **characterized in that** the first area (44) is a small volume which in particular is confined between two lateral walls as in a venturi or a piping restriction, and is smaller than 0.005 m3.

23. Device according to any one of Claims 18 to 22, **characterized in that** the filtration and/or decantation means comprise an enclosure (45, 70) in line contained between said first area where the emulsion is created and the contraction.

24. Device according to Claims 18 to 22, **characterized in that** the enclosure (45, 70) is a column with a mean diameter d and a height H ≥ 5 d, the sludge being introduced into the low part of the column in the gaseous bed created by the air injected at the level of said supply of sludge (for example above or below).

25. Device according to Claim 24, **characterized in that** the enclosure (45, 70) is tubular, with a mean cross-section of passage contained between 20 cm and 80 cm.

26. Device according to any one of Claims 18 to 25, **characterized in that** it comprises a concentrator (56, 74) of sludge by flotation/settling of the flocculated emulsion in a volume acting as a concentrator, and means for continuous discharge of the concentrated sludge by gravity, by means of overflow.

27. Device according to any one of Claims 18 to 26, **characterized in that** it comprises means (74) for complementary treatment of the floc downstream from the means for degassing by filtration and/or pressing.

28. Device according to Claim 27, **characterized in that** the complementary treatment means (74) comprise a rotary screening drum (81).

29. Device according to Claim 28, **characterized in that** the complementary treatment means additionally comprise a supplementary plate (82) for pressing the floc on the drum (81).
